# EUROPÄISCHE PATENTANMELDUNG

(11) **EP 4 637 086 A1**
(43) Veröffentlichungstag der Anmeldung: **22.10.2025**
(21) Anmeldenummer: 25168426.2
(22) Anmeldetag: 04.04.2025
(51) Int. Cl.: H04L 12/40

(54) **SPANNUNGSVERSORGUNGSEINSATZ ZUR DEZENTRALEN SPANNUNGSVERSORGUNG EINES GEBÄUDEAUTOMATISIERUNGSSYSTEMS**

(30) Priorität: 16.04.2024 LU 506916
(71) Anmelder: Phoenix Contact GmbH & Co KG, 32825 Blomberg (DE)
(72) Erfinder: Diekmann, Daniel, 33813 Oerlinghausen (DE); Ledermann, Joachim, 64839 Münster (DE); Zeuch, Jochen, 32825 Blomberg (DE); Steinhage, Dirk, 33106 Paderborn (DE)
(74) Vertreter: Patentship Patentanwaltsgesellschaft mbH

(57) **Zusammenfassung**

Die Erfindung betrifft einen Spannungsversorgungseinsatz (100) zur dezentralen Spannungsversorgung eines drahtgebundenen Gebäudeautomatisierungssystems mit einem Datenbus (130) zur Datenkommunikation, insbesondere eines KNX-Systems, wobei der Spannungsversorgungseinsatz (100) vorzugsweise in eine Hohlwanddose/Unterputzdose einsetzbar ist und folgende Merkmale umfasst: einen Netzanschluss (110) zum Anschluss einer Netzspannung; eine zweipolige (120a, 120b) Busklemme (120) zum Anschluss des Datenbusses (130) und Bereitstellen einer Datenbusgleichspannung (121) an dem Datenbus (130); einen Gleichrichter (140), der ausgebildet ist, die Netzspannung in die Datenbusgleichspannung (121) zu wandeln und an der Busklemme (120) bereitzustellen; eine an die Busklemme (120) vorgeschaltete Filterschaltung (141) zum Entkoppeln der Datenkommunikation von der an dem Datenbus (130) bereitgestellten Datenbusgleichspannung (121); und ein Kunststoffgehäuse (150), in dem der Netzanschluss (110), die Busklemme (120), der Gleichrichter (140) und die Filterschaltung (141) untergebracht sind.

## Beschreibung

Die Erfindung betrifft einen Spannungsversorgungseinsatz zur dezentralen Spannungsversorgung eines drahtgebundenen Gebäudeautomatisierungssystems mit einem Datenbus zur Datenkommunikation, insbesondere eines KNX-Systems. Die Erfindung betrifft ferner einen Tragschienen-Adapter mit einem solchen Spannungsversorgungseinsatz zum Einsatz auf eine Tragschiene für einen Installationsverteiler, insbesondere für ein KNX-System.

KNX ist ein Feldbus zur Gebäudeautomation. Der Name KNX ist eine Verkürzung aus dem vorübergehenden Namen KONNEX. In herkömmlichen Elektroinstallationen sind die Steuerfunktionen mit der Energieverteilung fest verbunden und erfolgen mittels Aus-, Wechsel- oder Tasterschaltungen. Nachträgliche Schaltungsänderungen sind daher nur mit hohem Aufwand umzusetzen. Auch übergeordnete Steuerfunktionen wie das zentrale Schalten aller Beleuchtungsstromkreise in einem Gebäude sind nur mit hohem Aufwand realisierbar. KNX in der typischen Installationsvariante mittels Twisted Pair Leitungen (KNX TP) trennt die Gerätesteuerung und die Spannungsversorgung voneinander, sodass es zwei Netze gibt, das Stromnetz zur Spannungsversorgung mit Wechselspannung und das Steuerungsnetz, der KNX-Bus, mit einer Nennspannung von 30 V Gleichspannung, wobei der Arbeitsbereich des Steuerungsnetzes zwischen 23 V und 31 V Gleichspannung liegen kann. Beide Netze können unabhängig voneinander oder parallel im Haus verlegt werden. Über den KNX-Bus können alle Geräte miteinander verbunden werden und damit Daten austauschen bzw. kommunizieren.

Bei der Installation des KNX-Systems ergeben sich höhere Anschaffungskosten als bei der herkömmlichen Elektroinstallation. Insbesondere sind größere Verteiler notwendig, um die Spannungsversorgung des Busses aufzunehmen. Diese Verteiler, die viel Platz einnehmen, müssen an bestimmten Stellen im Gebäude installiert werden. Die Installation des KNX-Systems ist daher bereits bei der Planung des Gebäudes zu berücksichtigen. Eine nachträgliche Installation oder Änderung des KNX-Systems hat zur Folge, dass zusätzliche oder andere Stromverteiler installiert werden müssen, was mit Eingriffen in die Gebäudesubstanz, d.h. Entfernen des Putzes und/oder Änderungen bzw. Umbau an Wand und Decken des Gebäudes zur zusätzlichen Kabelverlegung verbunden ist.

Die bisher vorhandenen marktüblichen KNX-Busspannungsversorgungen dienen der Anwendung auf der Tragschiene eines zentralen Installationsverteilers. Bei Erweiterung oder Änderung des KNX-Systems werden weitere oder andere KNX-Busspannungsversorgungen benötigt, welche zwingend wieder in einem zentralen Installationsverteiler auf die Tragschiene untergebracht werden müssen.

Die Erfindung hat es zur Aufgabe, eine einfache Weiterentwicklung der Versorgung von Geräten eines Gebäudeautomatisierungssystems, insbesondere eines KNX-Systems, für einen dezentralen Betrieb zu schaffen, ohne dass signifikante Eingriffe in die Gebäudesubstanz durchgeführt werden müssen. Insbesondere ist es eine Aufgabe der Erfindung, eine dezentrale KNX-Busspannungsversorgung zur Versorgung und Stabilisierung von KNX-Busteilnehmern im Feld mit individuellen Einbaumöglichkeiten zu schaffen.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Die Erfindung basiert auf der Idee, eine Busspannungsversorgung für ein Gebäudeautomatisierungssystem, insbesondere für ein KNX-Bussystem, in einer im Gebäude bereits vorhandenen Unterputzdose oder Hohlwanddose zu installieren, um somit Eingriffe in die Gebäudesubstanz, insbesondere Aufriss von Putz, Wänden und/oder Decken des Gebäudes zu vermeiden.

Die Erfindung basiert auf der konsequenten Weiterentwicklung der Versorgung von KNX-Teilnehmern für einen dezentralen KNX-Betrieb oder einer unabhängigen Insellösung und einer dezentralen KNX-Busspannungsversorgung zur Versorgung und Stabilisierung von KNX-Busteilnehmern im Feld mit individuellen Einbaumöglichkeiten. Die KNX Unterputz Busspannungsversorgung kann auf verschiedene Arten installiert werden und bietet damit volle Flexibilität in der Verortung des Gerätes. Die Hauptanwendung und Installation liegt hier in marktüblichen Unterputzdosen bzw. Hohlwanddosen.

Damit ergeben sich die folgenden Vorteile für den Installateur und den Endverbraucher: Der Installateur benötigt bei einer Installation oder Anlagenerweiterung des KNX-Bussystems keinen extra Installationsverteiler/Kleinverteiler, wie bei herkömmlichen Tragschienen KNX-Spannungsversorgungen der Fall. Zudem kann die KNX-Spannungsversorgung als Busspannungsstabilisierung im Feld genutzt werden. Die Möglichkeit der Unterputzinstallation der kleinen KNX-Busspannungsversorgung in einer marktüblichen Unterputzdose verhindert unnötige Mehrkosten in Form von zusätzlich erforderlichem Installationsmaterial und Installationsarbeiten, wie Schlitzen und Stemmen bzw. Öffnen der Wände.

Das hier vorgestellte Unterputzgerät bzw. hier auch allgemein als Spannungsversorgungseinsatz bezeichnet, ist nicht auf einen extra Installationsverteiler bzw. Kleinverteiler angewiesen. Es dient zur Anlagenerweiterung, aber auch zur Sicherstellung der KNX-Kommunikation im Feld, also genau an der Stelle, an der eine Stabilisierung der benötigten Leistung gebraucht wird. Die hier vorgestellte KNX-Busspannungsversorgung dient zudem als Stabilisator der KNX-Busspannung von üblicherweise 30 V DC-Gleichspannung. Zum anderen können auch nachträglich lokale KNX-Insellösungen aufgebaut werden, ohne dass zusätzliche Schlitz- und Stemmarbeiten für Unterputzinstallationen eines Installationsverteilers/Kleinverteilers notwendig sind. Die KNX-Busspannungsversorgung dient somit der Systemerweiterung und -stabilisierung ohne weiteren Schaden an Wand, Decke oder Boden durch die Integration der sonst benötigten Installationen.

Die Erfindung stellt somit eine neue, bisher nicht verfügbare, dezentrale Anwendung einer Busspannungsversorgung als Unterputzgerät in handelsüblichen Unterputz- und Hohlwanddosen vor. Ferner stellt die Erfindung einen neuen Tragschienen-Adapter vor zur Installation des Unterputzgeräts in einem Verteiler.

Der hier vorgestellte Spannungsversorgungseinsatz bzw. das Unterputzgerät kann insbesondere in KNX-Systemen zur Gebäudeautomatisierung eingesetzt werden, vorzugsweise gemäß dem KNX-Standard 2.1 bzw. dem künftigen KNX-Standard 3.0. Gemäß einem ersten Aspekt wird die oben dargestellte Aufgabe gelöst durch einen Spannungsversorgungseinsatz zur dezentralen Spannungsversorgung eines drahtgebundenen Gebäudeautomatisierungssystems mit einem Datenbus zur Datenkommunikation, wobei der Spannungsversorgungseinsatz in eine Hohlwanddose einsetzbar ist und folgende Merkmale umfasst: einen Netzanschluss zum Anschluss einer Netzspannung; eine zweipolige Busklemme zum Anschluss des Datenbusses und Bereitstellen einer Datenbusgleichspannung an dem Datenbus; einen Gleichrichter, der ausgebildet ist, die Netzspannung in die Datenbusgleichspannung zu wandeln und an der Busklemme bereitzustellen; eine an die Busklemme vorgeschaltete Filterschaltung, insbesondere eine KNX-Filterschaltung zum Entkoppeln der Datenkommunikation von der an dem Datenbus bereitgestellten Datenbusgleichspannung; und ein Kunststoffgehäuse, in dem der Netzanschluss, die Busklemme, der Gleichrichter und die Filterschaltung untergebracht sind.

Ein solcher Spannungsversorgungseinsatz schafft eine einfache Spannungsversorgung von Geräten eines Gebäudeautomatisierungssystems beispielsweise KNX, für den dezentralen Betrieb, ohne dass signifikante Eingriffe in die Gebäudesubstanz durchgeführt werden müssen. Der Spannungsversorgungseinsatz stellt eine dezentrale KNX-Busspannungsversorgung zur Versorgung und Stabilisierung von KNX-Busteilnehmern im Feld mit individuellen Einbaumöglichkeiten bereit.

In einer vorteilhaften Ausführungsform des Spannungsversorgungseinsatzes sind der Netzanschluss, die Busklemme, der Gleichrichter und die Filterschaltung auf einer Trägerplatte angeordnet, wobei die Trägerplatte in dem Kunststoffgehäuse eingebaut ist.

Der Netzanschluss, die Busklemme, der Gleichrichter und die Filterschaltung können übersichtlich auf einer Trägerplatte installiert werden, beispielsweise auf einem Printed Circuit Board (PCB), und so automatisiert in großer Stückzahl gefertigt werden.

In einer vorteilhaften Ausführungsform des Spannungsversorgungseinsatzes ist das drahtgebundene Gebäudeautomatisierungssystem ein KNX-System mit einem KNX-Datenbus zur KNX-Datenkommunikation; wobei die zweipolige Busklemme eine KNX-Klemme ist.

Das KNX-System ist das am meist verwendete Bussystem im Bereich der Gebäudeautomatisierung. Der Spannungsversorgungseinsatz lässt sich somit in den meisten Installationen zur Gebäudeautomatisierung einsetzen. Vorteile von KNX sind die Parametrierung und Steuerung der Geräte und Verbraucher. So kann durch einfache Programmierung der Geräte jeder Eingang bzw. Sensor jedem Ausgang bzw. Aktor zugeordnet werden. Ein Aktor, der zuvor zum Anschalten einer Deckenleuchte bestimmt war, kann in kurzer Zeit umprogrammiert werden, um beispielsweise ein Garagentor zu öffnen. Ein Sensor, der zuvor zum Erfassen der Sonneneinstrahlung konzipiert war, kann umprogrammiert werden, um die Daten eines Bewegungsmelders abzufragen.

In einer vorteilhaften Ausführungsform des Spannungsversorgungseinsatzes ist die zweipolige Busklemme von außerhalb des Kunststoffgehäuses zugänglich.

Damit lässt sich der Datenbus auf einfache Weise an die KNX-Busklemme des Spannungsversorgungseinsatzes anschließen. Die in der Hohlwanddose bereits vorverlegten Kabel können einfach an die zweipolige Busklemme angeschlossen werden, ohne dass Kabel neu verlegt werden müssen.

In einer vorteilhaften Ausführungsform des Spannungsversorgungseinsatzes ist der Gleichrichter ausgebildet, eine Datenbusgleichspannung von etwa 30 V DC bei einem Ausgangsstrom von etwa 320 mA oder 160 mA bereitzustellen.

Eine solche Datenbusgleichspannung von etwa 30 V DC wird typischerweise bei KNX-Bussystemen verwendet, so dass sich der Spannungsversorgungseinsatz zur Spannungsversorgung eines KNX-Bussystems eignet.

In einer vorteilhaften Ausführungsform des Spannungsversorgungseinsatzes ist das Kunststoffgehäuse quadratisch mit abgeflachten Ecken ausgeformt, und weist folgende Maße mit einer Toleranz von etwa 0,5 mm auf: Diagonale zwischen zwei gegenüberliegenden abgeflachten Ecken: etwa 55 mm, Gehäusebreite zwischen zwei Seiten des Quadrats: etwa 50 mm, und Gehäusetiefe: etwa 25 mm.

Ein solcher Spannungsversorgungseinsatz passt optimal in eine Hohlwanddose, deren Standarddurchmesser 68 mm oder auch größer beträgt. Der Spannungsversorgungseinsatz kann beispielsweise mit Klemmen darin festgeklemmt oder mit Schrauben in der Hohlwanddose angeschraubt werden oder auf sonstige Art fixiert werden.

In einer vorteilhaften Ausführungsform des Spannungsversorgungseinsatzes umfasst der Spannungsversorgungseinsatz: eine Mehrzahl von Leuchtdioden, die an zumindest zwei Außenseiten des Kunststoffgehäuses umlaufend angeordnet sind und zum Anzeigen von Betriebszuständen der Spannungsversorgungseinsatz ausgebildet sind, mit: einer ersten Leuchtdiode, die ausgebildet ist, einen normalen Betriebszustand des Spannungsversorgungseinsatzes anzuzeigen, bei dem die Datenbusgleichspannung innerhalb eines Toleranzbereichs liegend an der Busklemme bereitgestellt wird; einer zweiten Leuchtdiode, die ausgebildet ist, einen Überlastzustand des Spannungsversorgungseinsatzes anzuzeigen, bei dem die an der Busklemme bereitgestellte Datenbusgleichspannung außerhalb des Toleranzbereichs liegt; und einer dritten Leuchtdiode, die ausgebildet ist, einen Reset-Zustand des Spannungsversorgungseinsatzes anzuzeigen, bei dem der Spannungsversorgungseinsatz vorübergehend nicht funktionsfähig ist.

Mit solchen Leuchtdioden kann von verschiedenen Außenseiten des Kunststoffgehäuses der Betriebszustand der Spannungsversorgung effizient überwacht werden. Der Spannungsversorgungseinsatz lässt sich damit von verschiedenen Seiten aus in die Hohlwanddose oder in einen unten beschriebenen Tragschienen-Adapter installieren, ohne dass es zu Einschränkungen der Sichtbarkeit der Leuchtdioden kommt.

In einer vorteilhaften Ausführungsform des Spannungsversorgungseinsatzes umfasst der Spannungsversorgungseinsatz: einen oder mehrere an dem Kunststoffgehäuse angebrachte Verrastungselemente, die zum Verrasten in einen Tragschienen-Adapter zum Einsatz in eine Tragschiene für einen Busspannungsverteiler ausgebildet sind, wobei die ein oder mehreren Verrastungselemente ausgebildet sind, das Kunststoffgehäuse mit dem Tragschienen-Adapter mechanisch zu fixieren.

Die Verrastungselemente bieten eine sichere und stabile Befestigung des Spannungsversorgungseinsatzes in einem Tragschienen-Adapter. Sie können zudem auch zur Befestigung des Spannungsversorgungseinsatzes in der Hohlwanddose genutzt werden.

In einer vorteilhaften Ausführungsform des Spannungsversorgungseinsatzes sind die ein oder mehreren Verrastungselemente als Schwalbenschwanzverbindungen ausgeformt.

Solche Schwalbenschwanzverbindungen sind in hohem Maße formschlüssig, nicht nur quer zum Schwalbenschwanz, sondern auch in dessen Längsrichtung. Die Schwalbenschwanzverbindung wird in der dritten Richtung, die auch quer zum Schwalbenschwanz liegt, gefügt.

In einer vorteilhaften Ausführungsform des Spannungsversorgungseinsatzes ist der Spannungsversorgungseinsatz ausgebildet, mit der an der Busklemme bereitgestellten Datenbusgleichspannung eine Busspannungsversorgung des Busspannungsverteilers zu stabilisieren.

Der Spannungsversorgungseinsatz kann somit in vorteilhafter Weise zur Stabilisierung der Busspannungsversorgung des Busspannungsverteilers eingesetzt werden, etwa wenn mehrere Geräte über den Busspannungsverteiler versorgt werden und der Busspannungsverteiler nicht zur Versorgung einer solchen Anzahl von Geräten ausgelegt ist.

In einer vorteilhaften Ausführungsform des Spannungsversorgungseinsatzes ist der Spannungsversorgungseinsatz ausgebildet zum Einbau in eine Unterputzdose oder eine Hohlwanddose und damit zur dezentralen Spannungsversorgung des Datenbusses unabhängig von einem in einer Tragschiene montierten Busspannungsverteiler.

Der Spannungsversorgungseinsatz lässt sich somit flexibel einsetzen, nicht nur in einer Hohlwanddose, sondern auch in einer Unterputzdose oder anderen Arten von Öffnungen oder Hohlräumen in Wand und Decke.

In einer vorteilhaften Ausführungsform des Spannungsversorgungseinsatzes ist der Spannungsversorgungseinsatz ausgebildet zum Parallelbetrieb mit anderen Spannungsversorgungseinsätzen zur dezentralen Spannungsversorgung und/oder Busspannungsverteilern.

Damit lässt sich die Busspannungsversorgung des Gebäudeautomatisierungssystems auf einfache Weise erweitern, indem ein oder mehrere Spannungsversorgungseinsätze zu dem Gebäudeautomatisierungssystem zugeschaltet werden.

Gemäß einem zweiten Aspekt wird die oben dargestellte Aufgabe gelöst durch einen Tragschienen-Adapter zum Einsatz in eine Tragschiene für einen Busspannungsverteiler, wobei der Tragschienen-Adapter folgendes umfasst: ein Kunststoffgehäuse, das zum Einsatz auf einer Tragschiene für einen Busspannungsverteiler ausgeformt ist; wobei das Kunststoffgehäuse ferner ausgebildet ist, einen Spannungsversorgungseinsatz gemäß dem oben beschriebenen ersten Aspekt aufzunehmen und mechanisch zu fixieren.

Über einen solchen Tragschienen-Adapter lässt sich der Spannungsversorgungseinsatz auch in einem Installationsverteiler anbringen und dort als zusätzliche Spannungsversorgung einsetzen. Der Spannungsversorgungseinsatz lässt sich somit flexibel einsetzen.

In einer vorteilhaften Ausführungsform des Tragschienen-Adapters umfasst das Kunststoffgehäuse ein oder mehrere Einrastelemente, die insbesondere als Schwalbenschwanzverbindungen ausgeformt sind, und ausgebildet sind, den Spannungsversorgungseinsatz gemäß dem oben beschriebenen ersten Aspekt aufzunehmen und zu verrasten.

Die Einrastelemente bieten eine sichere und stabile Befestigung des Spannungsversorgungseinsatzes an dem Tragschienen-Adapter. Bei der Ausführung als Schwalbenschwanzverbindungen kommt es zu einer in hohem Maße formschlüssigen Verbindung, nicht nur quer zum Schwalbenschwanz, sondern auch in dessen Längsrichtung. Die Schwalbenschwanzverbindung kann hier in der dritten Richtung, die auch quer zum Schwalbenschwanz liegt, gefügt werden.

In einer vorteilhaften Ausführungsform des Tragschienen-Adapters weist das Kunststoffgehäuse eine Aussparung für eine Mikrodosenklemme auf zum elektrischen Installieren der von der Busklemme des Spannungsversorgungseinsatzes bereitgestellten Datenbusgleichspannung in dem Busspannungsverteiler.

Über die Mikrodosenklemme kann eine einfache und sichere Installation des Spannungsversorgungseinsatzes an dem Busspannungsverteiler erfolgen.

In einer vorteilhaften Ausführungsform des Tragschienen-Adapters weist das Kunststoffgehäuse einen Adapter mit einer doppelpoligen Klemme auf zum elektrischen Anschließen des Netzanschlusses des Spannungsversorgungseinsatzes.

Über einen solchen Adapter mit doppelpoliger Klemme lässt sich ein einfacher Anschluss an das Stromnetz realisieren.

In einer vorteilhaften Ausführungsform des Tragschienen-Adapters ist das Kunststoffgehäuse zur seitlichen Aufnahme des Spannungsversorgungseinsatzes ausgeformt.

Damit kann der Spannungsversorgungseinsatz seitlich im Tragschienen-Adapter installiert werden und benötigt somit weniger Platz, so dass er in den üblichen Steckplätzen des Tragschienen-Adapters montiert werden kann.

Gemäß einem dritten Aspekt wird die oben dargestellte Aufgabe gelöst durch ein Verfahren zur dezentralen Spannungsversorgung eines drahtgebundenen Gebäudeautomatisierungssystems mit einen Datenbus zur Datenkommunikation, wobei das Verfahren die folgenden Schritte umfasst: Bereitstellen eines Spannungsversorgungseinsatzes gemäß dem oben beschriebenen ersten Aspekt; Einsetzen des Spannungsversorgungseinsatzes in eine Hohlwanddose oder Unterputzdose; Anschließen der in der Dose vorverlegten Adern des Datenbusses an die zweipolige Busklemme des Spannungsversorgungseinsatzes; und Anschließen der in der Dose vorverlegten Netzspannungsdrähte an den Netzanschluss des Spannungsversorgungseinsatzes.

Mit einem solchen Verfahren lässt sich auf einfache Weise eine dezentrale Spannungsversorgung und flexible Erweiterung eines drahtgebundenen Gebäudeautomatisierungsnetzes realisieren, ohne dass Eingriffe in die Gebäudesubstanz, d.h., Abriss von Putz, Wänden und/oder Decken notwendig sind.

In einer vorteilhaften Ausführungsform des Verfahrens ist das drahtgebundene Gebäudeautomatisierungssystem ein KNX-System mit einem KNX-Datenbus zur KNX-Datenkommunikation; wobei die zweipolige Busklemme eine KNX-Klemme ist.

Das Verfahren lässt sich damit insbesondere zum Aufbau und zur Erweiterung von KNX-Bussystemen einsetzen.

Weitere Ausführungsbeispiele werden Bezug nehmend auf die beiliegenden Zeichnungen erläutert. Es zeigen:
- Fig. 1: einen erfindungsgemäßen Spannungsversorgungseinsatz 100 in Frontansicht sowie in den Seitenansichten links und rechts gemäß einer Ausführungsform;
- Fig. 2: einen erfindungsgemäßen Tragschienen-Adapter 200 mit montiertem Spannungsversorgungseinsatz 100 in Frontansicht (entsprechend einer Seitenansicht im Vergleich zur oberen Darstellung in Figur 1) gemäß einer Ausführungsform;
- Fig. 3: den Tragschienen-Adapter 200 aus Figur 2 in den Seitenansichten links und rechts; und
- Fig. 4: ein Gebäudeautomatisierungssystem 400 in Form eines KNX-Netzes, bei dem ein erfindungsgemäßer Spannungsversorgungseinsatz 100 zur Spannungsversorgung des Datenbusses 130 eingesetzt wird.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

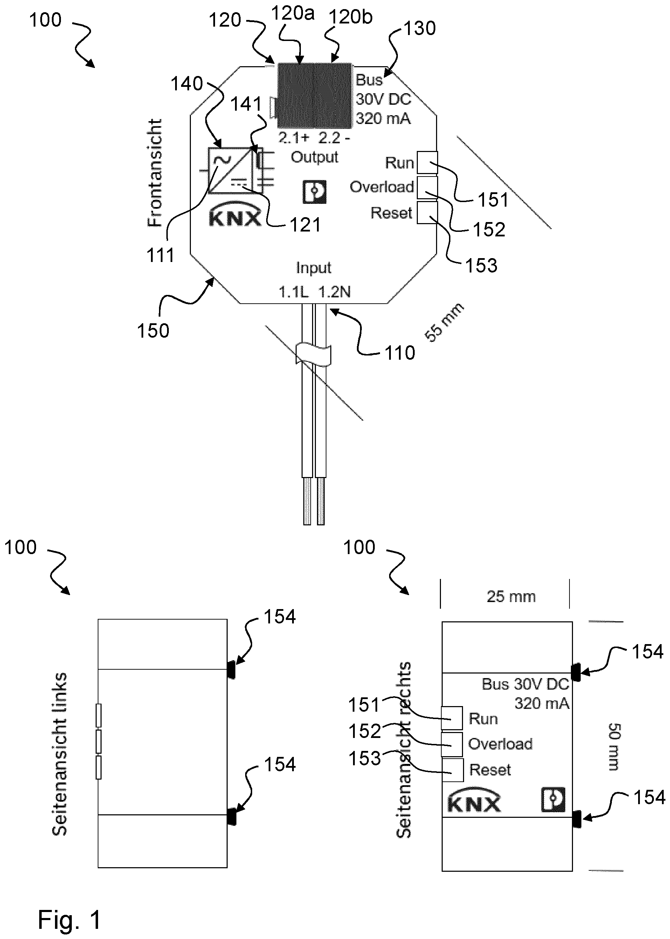

Fig. 1 zeigt einen erfindungsgemäßen Spannungsversorgungseinsatz 100 in Frontansicht sowie in den Seitenansichten links und rechts gemäß einer Ausführungsform.

Der Spannungsversorgungseinsatz 100 dient zur dezentralen Spannungsversorgung eines drahtgebundenen Gebäudeautomatisierungssystems mit einem Datenbus 130 zur Datenkommunikation.

Der Spannungsversorgungseinsatz 100 ist in eine Hohlwanddose einsetzbar und umfasst folgende Merkmale: einen Netzanschluss 110 zum Anschluss einer Netzspannung; eine zweipolige120a, 120b Busklemme 120 zum Anschluss des Datenbusses 130 und Bereitstellen einer Datenbusgleichspannung 121 an dem Datenbus 130; einen Gleichrichter 140, der ausgebildet ist, die Netzspannung in die Datenbusgleichspannung 121 zu wandeln und an der Busklemme 120 bereitzustellen; eine an die Busklemme 120 vorgeschaltete Filterschaltung 141 zum Entkoppeln der Datenkommunikation von der an dem Datenbus 130 bereitgestellten Datenbusgleichspannung 121.

Der Spannungsversorgungseinsatz 100 umfasst ferner ein Kunststoffgehäuse 150, in dem der Netzanschluss 110, die Busklemme 120, der Gleichrichter 140 und die Filterschaltung 141 untergebracht sind.

Ein solcher Spannungsversorgungseinsatz 100 ist nicht auf einen extra Installationsverteiler/Kleinverteiler angewiesen. Er dient zur Anlagenerweiterung, aber auch zur Sicherstellung der Datenbus-Kommunikation im Feld, insbesondere an der Stelle, an der eine Stabilisierung der benötigten Leistung benötigt wird. Der Spannungsversorgungseinsatz 100 dient zudem als Stabilisator der Datenbusgleichspannung (zum Beispiel von 30 V DC bei KNX). Zum anderen können auch (nachträglich) lokale Datenbus-Insellösungen aufgebaut werden, ohne zusätzliche Schlitz- und Stemmarbeiten für Unterputzinstallationen eines Installationsverteilers bzw. Kleinverteilers. Zusammengefasst dient der Spannungsversorgungseinsatz 100 der Systemerweiterung und -stabilisierung ohne dass weiterer Schaden an Wand, Decke oder Boden durch die Integration der sonst benötigten Installationen entsteht.

Der Gleichrichter 140 wird zur Umwandlung von Wechselspannung aus dem Netz in Gleichspannung, d.h., hier der Datenbusgleichspannung 121 verwendet. Die Gleichrichtung dient der Versorgung des Datenbusses mit Gleichspannung. Über den Datenbus 130 sind die Teilnehmer des Gebäudeautomatisierungssystems, wie zum Beispiel Sensoren und Aktoren, an das System angeschlossen. Die Gleichrichtung erfolgt durch ein Schaltnetzteil, in dem u. a. Gleichrichterdioden verbaut sind.

Die Filterschaltung 141 ist eine Spule bzw. Induktivität, die zum Entkoppeln der Datenkommunikation von der an dem Datenbus 130 bereitgestellten Datenbusgleichspannung 121 dient. Die Filterschaltung 141 ist dafür verantwortlich, dass auf dem Datenbus 130 eine Wechselspannung zur Datenkommunikation übertragen werden kann. Die Filterschaltung 141 ist somit eine elektronische Schaltung, die eine Filterung im Frequenzbereich bewirkt, um so die Datenkommunikation von der Datenbusgleichspannung zu entkoppeln. Die Filterschaltung 141 kann dazu eine oder auch mehrere Induktivitäten und Widerstände umfassen, um die vorbestimmte Filterung zu erreichen. Zusätzlich können auch Kapazitäten verwendet werden, um eine vorbestimmte Frequenzantwort der Filterschaltung zu erzielen. Bei KNX spricht man hier auch von einer Drossel.

Die Hohlwanddose kann als eine Gerätedose oder Abzweigdose für den Einsatz des Spannungsversorgungseinsatzes ausgebildet sein, zum Beispiel in Wänden mit Hohlräumen, zum Beispiel mit Gipskartonplatten aufgebaute Wände. Hohlwanddosen existieren in verschiedenen Größen. Der Standarddurchmesser der Hohlwanddose beträgt 68 mm, es gibt auch kleinere (z. B. 35 mm) und größere (z. B. 74 mm) Durchmesser. An der Rückseite der Hohlwanddose befinden sich verschieden große Leitungseinlässe für die Einführung von verschieden dicken Leitungen. Befestigt wird die Hohlwanddose mit zwei an den Seiten vorhandenen Klemmschrauben bzw. Metallkrallen.

Der Spannungsversorgungseinsatz 100 ist auch in eine Unterputzdose einsetzbar. Eine Unterputzdose wird bei der Installation von Elektro- und Telekommunikationskabeln verwendet, die unter dem Putz, also nicht auf dem Putz, verlegt werden. Dabei existieren verschiedene Arten von Unterputzdosen, wie zum Beispiel als Gerätedose zum Einbau von Schaltern, Dimmern, Steckdosen, Sensoren oder Aktoren; oder als Abzweig- oder Wandauslassdose zum Anschluss fest verlegter Kabel.

In einer Ausführungsform des Spannungsversorgungseinsatzes 100 können der Netzanschluss 110, die Busklemme 120, der Gleichrichter 140 und die Filterschaltung 141 auf einer Trägerplatte angeordnet sein, die in dem Kunststoffgehäuse angeordnet sein kann. Die Trägerplatte kann beispielsweise eine Leiterplatte bzw. PCB sein, auf der die elektrischen Komponenten zusammen mit ihren Verschaltungen angebracht sein können.

Das drahtgebundene Gebäudeautomatisierungssystem kann insbesondere ein KNX-System mit einem KNX-Datenbus 130 zur KNX-Datenkommunikation sein. Die zweipolige 120a, 120b Busklemme 120 kann dann eine KNX-Klemme sein, die an ihrer zweifarbigen Darstellung (rot/schwarz) der Klemmen 120a, 120b eindeutig erkennbar ist.

Die zweipolige 120a, 120b Busklemme 120 kann von außerhalb des Kunststoffgehäuses 150 zugänglich sein, da sie beispielsweise an einer Oberseite des Kunststoffgehäuses 150 angebracht ist, wie in Figur 1 dargestellt. Die zweipolige 120a, 120b Busklemme 120 kann ausgebildet sein, zwei an der Hohlwanddose verlegte Adern des Datenbusses 130 anzuschließen. Dazu kann die Busklemme 120 manuell geöffnet werden, um die beiden Adern des Datenbusses 130 einzuklemmen und damit elektrisch mit dem Spannungsversorgungseinsatz 100 zu kontaktieren. Die Busklemme 120 kann neben den hier erwähnten zwei Aderanschlüssen 120a, 120b noch weitere Anschlüsse zum Anschluss weiterer Adern aufweisen.

In einer Ausführungsform kann der Gleichrichter 140 beispielsweise ausgebildet sein, eine Datenbusgleichspannung 121 von etwa 30 V DC bei einem Ausgangsstrom von etwa 320 mA oder 160 mA bereitzustellen. Es versteht sich, dass auch andere Datenbusgleichspannungen 121 bei diesem oder anderen Ausgangsströmen bereitgestellt werden können.

Das Kunststoffgehäuse 150 kann, wie in Figur 1 dargestellt, beispielsweise quadratisch mit abgeflachten Ecken ausgeformt sein und folgende Maße mit einer Toleranz von etwa 0,5mm aufweisen: Diagonale zwischen zwei gegenüberliegenden abgeflachten Ecken: etwa 55 mm, Gehäusebreite zwischen zwei Seiten des Quadrats: etwa 50mm, und Gehäusetiefe: etwa 25mm. Natürlich sind auch andere Maße möglich, bei denen das Kunststoffgehäuse in eine entsprechende Unterputzdose oder Hohlwanddose passt.

In einer Ausführungsform des Spannungsversorgungseinsatzes 100 entsprechend der Darstellung in Figur 1 umfasst der Spannungsversorgungseinsatz 100 eine Mehrzahl von Leuchtdioden (LEDs) 151, 152, 153, die an zumindest zwei Außenseiten des Kunststoffgehäuses 150 umlaufend angeordnet sind und zum Anzeigen von Betriebszuständen der Spannungsversorgungseinsatz 100 ausgebildet sind.

Beispielsweise kann die Mehrzahl von Leuchtdioden folgende LEDs umfassen:
Eine erste Leuchtdiode 151, die ausgebildet sein kann, einen normalen Betriebszustand des Spannungsversorgungseinsatzes 100 anzuzeigen, bei dem die Datenbusgleichspannung 121 innerhalb eines Toleranzbereichs liegend an der Busklemme 120 bereitgestellt wird. Beispielsweise kann der Toleranzbereich um eine Gleichspannung von 30 V liegen, zum Beispiel von 25V bis 35V.
Eine zweite Leuchtdiode 152, die ausgebildet sein kann, einen Überlastzustand des Spannungsversorgungseinsatzes 100 anzuzeigen, bei dem die an der Busklemme 120 bereitgestellte Datenbusgleichspannung 121 außerhalb des Toleranzbereichs liegt.
Eine dritte Leuchtdiode 153, die ausgebildet sein kann, einen Reset-Zustand des Spannungsversorgungseinsatzes 100 anzuzeigen, bei dem der Spannungsversorgungseinsatz 100 sich im Reset-Zustand befindet. Dabei wird der Bus für eine definierte Zeit kurzgeschlossen und ist vorübergehend nicht funktionsfähig.

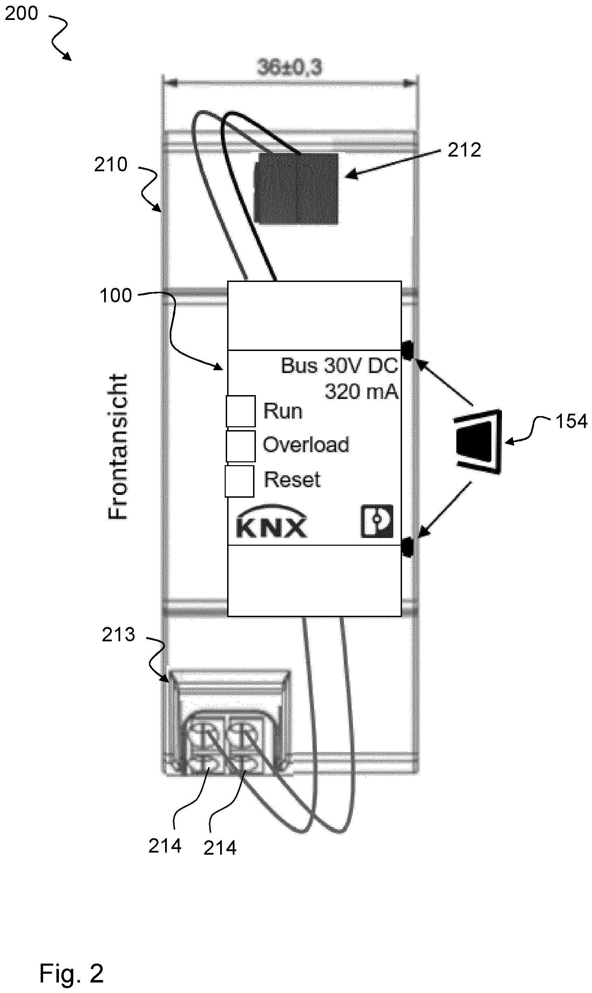

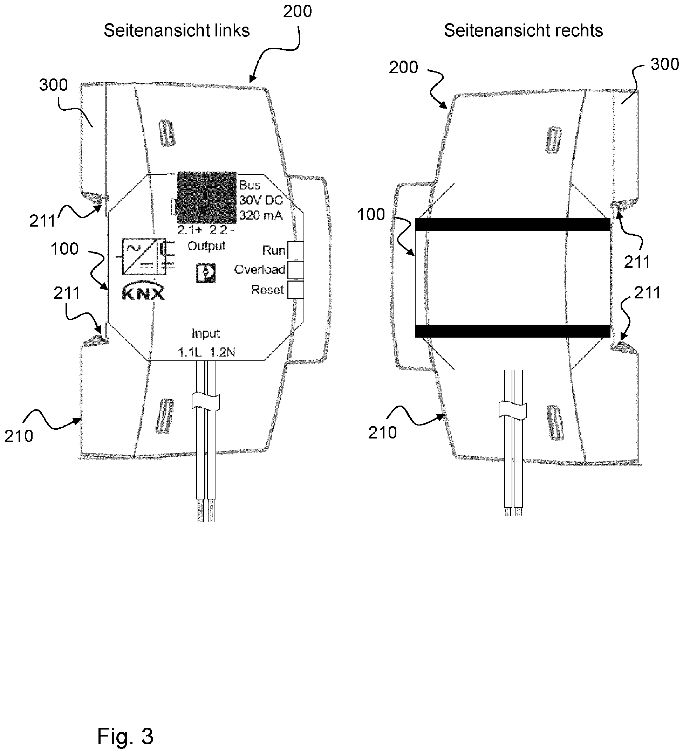

Der Spannungsversorgungseinsatz 100 kann eine oder mehrere an dem Kunststoffgehäuse 150 angebrachten Verrastungselementen 154 aufweisen, die zum Verrasten in einen Tragschienen-Adapter 200 zum Einsatz in eine Tragschiene 300 für einen Busspannungsverteiler ausgebildet sind, wie in den Figuren 2 und 3 dargestellt.

Die ein oder mehreren Verrastungselemente 154 können ausgebildet sein, das Kunststoffgehäuse 150 mit dem Tragschienen-Adapter 200 mechanisch zu fixieren.

Beispielsweise können die ein oder mehreren Verrastungselemente 154 als Schwalbenschwanzverbindungen ausgeformt sein. Solche Schwalbenschwanzverbindungen sind in hohem Maße formschlüssig, nicht nur quer zum Schwalbenschwanz, sondern auch in dessen Längsrichtung. Die Schwalbenschwanzverbindung wird in der dritten Richtung, die auch quer zum Schwalbenschwanz liegt, gefügt.

Der Spannungsversorgungseinsatz 100 kann ausgebildet sein, mit der an der Busklemme 120 bereitgestellten Datenbusgleichspannung 121 eine Busspannungsversorgung des Busspannungsverteilers zu stabilisieren.

Der Spannungsversorgungseinsatz 100 kann zum Einbau in eine Unterputzdose oder eine Hohlwanddose ausgebildet sein und damit zur dezentralen Spannungsversorgung des Datenbusses 130 unabhängig von einem in einer Tragschiene montierten Busspannungsverteiler.

Der Spannungsversorgungseinsatz 100 kann zum Parallelbetrieb mit anderen Spannungsversorgungseinsätzen 100 zur dezentralen Spannungsversorgung und/oder Busspannungsverteilern ausgebildet sein.

In einer Ausführungsform umfasst der Spannungsversorgungseinsatz 100 die folgenden Merkmale:
- Kunststoffgehäuse 150, Material Kunststoff, z.B. Polycarbonat oder ähnliches, Brennbarkeitsklasse V0 nach UL 94;
- Anschluss AC-Eingang (Netzanschluss 110): zwei Einzeladern, braun/blau;
- Anschluss DC-Ausgang: KNX-Klemme 120, rot/schwarz 120a, 120b;
- AC-Eingangsspannungsbereich: 100 V AC ... 240 V AC;
- DC-Eingangsspannungsbereich: 110 V DC ... 250 V DC;
- Ausgangsleistung: 320 mA @30 V DC;
- Maße [mm]: 55 (Diagonale) x 50 (Breite) x 25 (Tiefe), +/- 0,5 Toleranz;
- KNX- und firmenspezifisches Logo, Schemazeichnung der KNX Busspannungsversorgung, Leistungsangaben, Betitelung der umlaufenden LED's 151, 152, 153;
- Weitere Beschreibung und Symbole auf der Rückseite vorgemerkt.

Im Folgenden wird eine Ausführungsform des in Figur 1 dargestellten Spannungsversorgungseinsatzes 100 näher beschrieben.

Der Spannungsversorgungseinsatz 100 erzeugt die für KNX erforderliche Systemspannung. Der Spannungsversorgungseinsatz 100 wird in einer Hohlwanddose oder Unterputzdose im Gebäude installiert. Der Datenbusanschluss erfolgt über die Busklemme 120. Die Filterschaltung 141, die im Gleichrichter 140 integriert sein kann, verhindert den Kurzschluss der Datentelegramme auf der Buslinie bzw. dem Datenbus 130. Für jede Buslinie eines KNX-Systems wird mindestens eine Spannungsversorgung benötigt. Eine zweite Spannungsversorgung ist nur erforderlich, wenn die Betriebsspannung an einem Teilnehmer unter 21 V abfällt. In einer Buslinie sind bis zu acht Spannungsversorgungen 100 zulässig.

Wird mindestens eine Spannungsversorgung 100 parallel an einer Buslinie betrieben, so ist bei Aufleuchten der Überlastanzeige 152 an einer oder mehreren Busspannungsversorgungen die Buskonfiguration so zu ändern, dass keine Überlastanzeige mehr erfolgt.

Zwischen den Spannungsversorgungen 100 ist keine Mindestleitungslänge notwendig. Zusätzlich ist an dieser Buslinie der Betrieb einer weiteren Busspannungsversorgung 100 zulässig, solange die Summe der Kurzschlussströme aller Busspannungsversorgungen 100 einer Buslinie 3 A nicht überschreitet. Die Entfernung zwischen einem Busgerät und der nächsten Spannungsversorgung 100 darf max. 350 m sein. Wenn nur die dezentrale Spannungsversorgung 100 verwendet wird, dann darf die maximale KNX-Leitungslänge einer Buslinie 350 m bei einer, 700 m bei zwei und 1000 m bei drei oder mehr dezentralen Spannungsversorgungen 100 betragen.

Die dezentrale Spannungsversorgung 100 hat eine Spannungs- und Stromregelung und ist damit kurzschlussfest. Kurze Netzunterbrechungen überbrückt sie mit mindestens 100 ms Pufferzeit. Aus Gründen der Versorgungssicherheit wird empfohlen, für den Netzanschluss der Spannungsversorgung 100 einen eigenen, separat abgesicherten Stromkreis zu verwenden.

Die Erfindung betrifft auch ein Verfahren zur dezentralen Spannungsversorgung eines drahtgebundenen Gebäudeautomatisierungssystems mit einen Datenbus 130 zur Datenkommunikation.

Das Verfahren umfasst die folgenden Schritte: Bereitstellen eines Spannungsversorgungseinsatzes 100 wie oben beschrieben; Einsetzen des Spannungsversorgungseinsatzes 100 in eine Hohlwanddose oder Unterputzdose; Anschließen der in der Dose vorverlegten Adern des Datenbusses 130 an die zweipolige Busklemme 120 des Spannungsversorgungseinsatzes 100; und Anschließen der in der Dose vorverlegten Netzspannungsdrähte an den Netzanschluss 110 des Spannungsversorgungseinsatzes 100.

Damit lässt sich auf einfache Weise eine dezentrale Spannungsversorgung und flexible Erweiterung eines drahtgebundenen Gebäudeautomatisierungsnetzes realisieren, ohne dass Eingriffe in die Gebäudesubstanz, d.h., Abriss von Putz, Wänden und/oder Decken notwendig sind.

Das drahtgebundene Gebäudeautomatisierungssystem ist vorzugsweise ein KNX-System mit einem KNX-Datenbus 130 zur KNX-Datenkommunikation. Die zweipolige Busklemme 120 ist hierbei eine KNX-Klemme.

Das Verfahren lässt sich damit insbesondere zum Aufbau und zur Erweiterung von KNX-Bussystemen einsetzen.

Fig. 2 zeigt einen erfindungsgemäßen Tragschienen-Adapter 200 mit montiertem Spannungsversorgungseinsatz 100 in Frontansicht gemäß einer Ausführungsform. Die Frontansicht in Figur 2 entspricht einer Seitenansicht der oberen Darstellung in Figur 1. Fig. 3 zeigt den Tragschienen-Adapter 200 aus Figur 2 in den Seitenansichten links und rechts.

Der Tragschienen-Adapter 200 dient zum Einsatz in einer Tragschiene 300 für einen Busspannungsverteiler.

Der Tragschienen-Adapter 200 umfasst ein Kunststoffgehäuse 210, das zum Einsatz in eine Tragschiene 300 für einen Busspannungsverteiler ausgeformt ist. Das Kunststoffgehäuse 210 ist ausgebildet, einen Spannungsversorgungseinsatz 100 wie oben zu Figur 1 beschrieben, aufzunehmen und mechanisch zu fixieren.

Das Kunststoffgehäuse 210 kann ein oder mehrere Einrastelemente 211 umfassen, die insbesondere als Schwalbenschwanzverbindungen ausgeformt sein können, und ausgebildet sind, den Spannungsversorgungseinsatz 100 wie oben zu Figur 1 beschrieben, aufzunehmen und zu verrasten.

Das Kunststoffgehäuse 210 kann eine Aussparung 212 für eine Mikrodosenklemme zum elektrischen Installieren der von der Busklemme 120 des Spannungsversorgungseinsatzes 100 bereitgestellten Datenbusgleichspannung 121 in dem Busspannungsverteiler aufweisen, wie in Figur 2 dargestellt.

Das Kunststoffgehäuse 210 kann einen Adapter 213 mit einer doppelpoligen Klemme 214 zum elektrischen Anschließen des Netzanschlusses 110 des Spannungsversorgungseinsatzes 100 aufweisen, wie in Figur 2 dargestellt.

Das Kunststoffgehäuse 210 kann zur seitlichen Aufnahme des Spannungsversorgungseinsatzes 100 ausgeformt sein, wie in Figur 3 näher dargestellt. Bei der seitlichen Aufnahme kann der Spannungsversorgungseinsatzes 100 platzsparend auf der Tragschiene 300 montiert werden.

In einer Ausführungsform umfasst der Tragschienen-Adapter 200 die folgenden Merkmale:
- Adapter 200 zur Aufnahme von Unterputzdosen-Geräten 100;
- Aufschiebbar inklusive "Verrastung" über zwei Schwalbenschwanzverbindungen 211;
- Obere Aussparung 212 optional für eine KNX-Klemme, zur einfacheren Installation in der Verteilung;
- Unterer Abgang 213 mit doppelpoliger Leiterplattenanschlussklemme, zur Verbindung der AC-Leiter (braun/blau);
- Kunststoffgehäuse 210, Material Kunststoff, z.B. Polycarbonat oder ähnliches, Brennbarkeitsklasse V0 nach UL 94:
- Maße [mm]: 90 (Höhe) x 36 (Breite) x 61 (Tiefe), +/- 0,5 Toleranz;
- Weitere Beschreibung und Symbole auf dem Seitenlabel vorgemerkt.

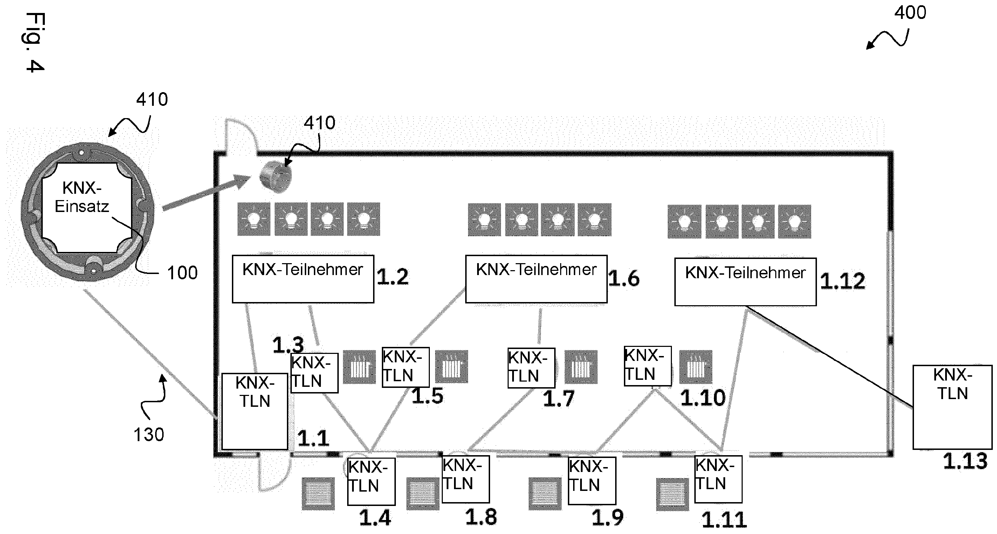

Fig. 4 zeigt ein Gebäudeautomatisierungssystem 400 in Form eines KNX-Netzes, bei dem ein erfindungsgemäßer Spannungsversorgungseinsatz 100 zur Spannungsversorgung des Datenbusses 130 eingesetzt wird.

Der Spannungsversorgungseinsatz 100 entspricht dem oben zu den Figuren 1 bis 3 beschriebenen Spannungsversorgungseinsatz 100, hier als KNX-Einsatz bezeichnet. Der Spannungsversorgungseinsatz 100 ist in einer Hohlwanddose 410 des Gebäudes installiert.

Er versorgt den Datenbus 130 mit der erforderlichen Datenbusgleichspannung 121. An den Datenbus 130 sind linienförmig eine Mehrzahl von KNX-Teilnehmern angeschlossen, in diesem Beispiel ein Heizungssteuergerät 1.1, eine Steuerung 1.2 für einen LED-Controller zum Steuern einer ersten Gruppe von LEDs, ein Steuergerät 1.3 eines ersten Heizkörpers, ein Steuergerät 1.4 einer ersten Jalousie, ein Steuergerät 1.5 eines zweiten Heizkörpers, eine Steuerung 1.6 für einen LED-Controller zum Steuern einer zweiten Gruppe von LEDs, ein Steuergerät 1.7 eines dritten Heizkörpers, ein Steuergerät 1.8 einer zweiten Jalousie, ein Steuergerät 1.9 einer dritten Jalousie, ein Steuergerät 1.10 eines vierten Heizkörpers, ein Steuergerät 1.11 einer vierten Jalousie, eine Steuerung 1.12 für einen LED-Controller zum Steuern einer dritten Gruppe von LEDs und ein Ventilator 1.13.

## Patentansprüche

1. Spannungsversorgungseinsatz (100) zur dezentralen Spannungsversorgung eines drahtgebundenen Gebäudeautomatisierungssystems mit einem Datenbus (130) zur Datenkommunikation, wobei der Spannungsversorgungseinsatz (100) in eine Hohlwanddose einsetzbar ist und folgende Merkmale umfasst:
einen Netzanschluss (110) zum Anschluss einer Netzspannung;
eine zweipolige (120a, 120b) Busklemme (120) zum Anschluss des Datenbusses (130) und Bereitstellen einer Datenbusgleichspannung (121) an dem Datenbus (130);
einen Gleichrichter (140), der ausgebildet ist, die Netzspannung in die Datenbusgleichspannung (121) zu wandeln und an der Busklemme (120) bereitzustellen;
eine an die Busklemme (120) vorgeschaltete Filterschaltung (141) zum Entkoppeln der Datenkommunikation von der an dem Datenbus (130) bereitgestellten Datenbusgleichspannung (121); und
ein Kunststoffgehäuse (150), in dem der Netzanschluss (110), die Busklemme (120), der Gleichrichter (140) und die Filterschaltung (141) untergebracht sind.

2. Spannungsversorgungseinsatz (100) nach Anspruch 1,
wobei der Netzanschluss (110), die Busklemme (120), der Gleichrichter (140) und die Filterschaltung (141) auf einer Trägerplatte angeordnet sind, wobei die Trägerplatte in dem Kunststoffgehäuse (150) angeordnet ist.

3. Spannungsversorgungseinsatz (100) nach Anspruch 1 oder 2,
wobei das drahtgebundene Gebäudeautomatisierungssystem ein KNX-System mit einem KNX-Datenbus (130) zur KNX-Datenkommunikation ist; und
wobei die zweipolige (120a, 120b) Busklemme (120) eine KNX-Klemme ist.

4. Spannungsversorgungseinsatz (100) nach einem der vorstehenden Ansprüche,
wobei die zweipolige (120a, 120b) Busklemme (120) von außerhalb des Kunststoffgehäuses (150) zugänglich ist und ausgebildet ist, zwei an der Hohlwanddose verlegte Adern des Datenbusses (130) anzuschließen.

5. Spannungsversorgungseinsatz (100) nach einem der vorstehenden Ansprüche,
wobei der Gleichrichter (140) ausgebildet ist, eine Datenbusgleichspannung (121) von etwa 30 V DC bei einem Ausgangsstrom von etwa 320 mA oder 160 mA bereitzustellen.

6. Spannungsversorgungseinsatz (100) nach einem der vorstehenden Ansprüche,
wobei das Kunststoffgehäuse (150) quadratisch mit abgeflachten Ecken ausgeformt ist, und folgende Maße mit einer Toleranz von etwa 0,5mm aufweist:
Diagonale zwischen zwei gegenüberliegenden abgeflachten Ecken: etwa 55 mm,
Gehäusebreite zwischen zwei Seiten des Quadrats: etwa 50mm, und
Gehäusetiefe: etwa 25mm.

7. Spannungsversorgungseinsatz (100) nach einem der vorstehenden Ansprüche, mit:
einer Mehrzahl von Leuchtdioden (151, 152, 153), die an zumindest zwei Außenseiten des Kunststoffgehäuses (150) umlaufend angeordnet sind und zum Anzeigen von Betriebszuständen der Spannungsversorgungseinsatz (100) ausgebildet sind, mit:
einer ersten Leuchtdiode (151), die ausgebildet ist, einen normalen Betriebszustand des Spannungsversorgungseinsatzes (100) anzuzeigen, bei dem die Datenbusgleichspannung (121) innerhalb eines Toleranzbereichs liegend an der Busklemme (120) bereitgestellt wird;
einer zweiten Leuchtdiode (152), die ausgebildet ist, einen Überlastzustand des Spannungsversorgungseinsatzes (100) anzuzeigen, bei dem die an der Busklemme (120) bereitgestellte Datenbusgleichspannung (121) außerhalb des Toleranzbereichs liegt; und
einer dritten Leuchtdiode (153), die ausgebildet ist, einen Reset-Zustand des Spannungsversorgungseinsatzes (100) anzuzeigen, bei dem der Spannungsversorgungseinsatz (100) vorübergehend nicht funktionsfähig ist.

8. Spannungsversorgungseinsatz (100) nach einem der vorstehenden Ansprüche, mit:
einem oder mehreren an dem Kunststoffgehäuse (150) angebrachten Verrastungselementen (154), die zum Verrasten in einen Tragschienen-Adapter (200) zum Einsatz in eine Tragschiene (300) für einen Busspannungsverteiler ausgebildet sind,
wobei die ein oder mehreren Verrastungselemente (154) ausgebildet sind, das Kunststoffgehäuse (150) mit dem Tragschienen-Adapter (200) mechanisch zu fixieren.

9. Spannungsversorgungseinsatz (100) nach Anspruch 8,
wobei die ein oder mehreren Verrastungselemente (154) als Schwalbenschwanzverbindungen ausgeformt sind.

10. Spannungsversorgungseinsatz (100) nach Anspruch 8 oder 9,
welcher ausgebildet ist, mit der an der Busklemme (120) bereitgestellten Datenbusgleichspannung (121) eine Busspannungsversorgung des Busspannungsverteilers zu stabilisieren.

11. Spannungsversorgungseinsatz (100) nach einem der vorstehenden Ansprüche,
ausgebildet zum Einbau in eine Unterputzdose oder eine Hohlwanddose und damit zur dezentralen Spannungsversorgung des Datenbusses (130) unabhängig von einem in einer Tragschiene montierten Busspannungsverteiler.

12. Spannungsversorgungseinsatz (100) nach einem der vorstehenden Ansprüche,
ausgebildet zum Parallelbetrieb mit anderen Spannungsversorgungseinsätzen (100) zur dezentralen Spannungsversorgung und/oder Busspannungsverteilern.

13. Tragschienen-Adapter (200) zum Einsatz in eine Tragschiene (300) für einen Busspannungsverteiler, wobei der Tragschienen-Adapter (200) folgendes umfasst:
ein Kunststoffgehäuse (210), das zum Einsatz in eine Tragschiene (300) für einen Busspannungsverteiler ausgeformt ist;
wobei das Kunststoffgehäuse (210) ferner ausgebildet ist, einen Spannungsversorgungseinsatz (100) gemäß einem der vorstehenden Ansprüche aufzunehmen und mechanisch zu fixieren.

14. Tragschienen-Adapter (200) nach Anspruch 13,
wobei das Kunststoffgehäuse (210) ein oder mehrere Einrastelemente (211) umfasst, die insbesondere als Schwalbenschwanzverbindungen ausgeformt sind, und ausgebildet sind, den Spannungsversorgungseinsatz (100) gemäß einem der Ansprüche 1 bis 12 aufzunehmen und zu verrasten.

15. Tragschienen-Adapter (200) nach Anspruch 13 oder 14,
wobei das Kunststoffgehäuse (210) eine Aussparung (212) für eine Mikrodosenklemme zum elektrischen Installieren der von der Busklemme (120) des Spannungsversorgungseinsatzes (100) bereitgestellten Datenbusgleichspannung (121) in dem Busspannungsverteiler aufweist.

16. Tragschienen-Adapter (200) nach einem der Ansprüche 13 bis 15,
wobei das Kunststoffgehäuse (210) einen Adapter (213) mit einer doppelpoligen Klemme (214) zum elektrischen Anschließen des Netzanschlusses (110) des Spannungsversorgungseinsatzes (100) aufweist.

17. Tragschienen-Adapter (200) nach einem der Ansprüche 13 bis 16,
wobei das Kunststoffgehäuse (210) zur seitlichen Aufnahme des Spannungsversorgungseinsatzes (100) ausgeformt ist.
